# EUROPEAN PATENT SPECIFICATION

(11) **EP 1 406 427 B1**
(45) Date of publication and mention of the grant of the patent: **05.03.2014**
(21) Application number: 03022263.2
(22) Date of filing: 01.10.2003
(51) Int. Cl.: H04M 1/02, H04M 1/673

(54) **Portable telephone, auto dial lock method employed therefor and program of the method**
Verfahren und Programm zur automatischen Wählsperre eines Mobiltelefons
Méthode et programme pour le verrouillage automatique du clavier d'un téléphone mobile

(30) Priority: 02.10.2002 JP 2002289329; 23.04.2003 JP 2003117738; 06.08.2003 JP 2003287264
(43) Date of publication of application: 07.04.2004
(73) Proprietor: NEC Corporation, Minato-ku Tokyo 108-8001 (JP)
(72) Inventor: Tani, Yukiko, NEC Saitama Ltd., Kodama-gun Saitama (JP)
(74) Representative: Glawe, Delfs, Moll

(56) References cited:
- EP-A- 1 161 062
- US-A1- 2002 058 527
- US-A1- 2002 077 079
- SONYERICSSON: "P900 BEDIENUNGSANLEITUNG" P900, August 2003 (2003-08), XP002336977

## Description

### BACKGROUND OF THE INVENTION

### Field of the Invention

The present invention relates to a portable telephone according to the preamble of claim 1, and an auto dial lock method according to the preamble of claim 11.

### Description of the Prior Art

Portable telephones conventionally have a dial lock function for invalidating key entries except an entry of personal identification codes used for unlocking or the like, in order to prevent unauthorized use by a third person in case such portable telephones are missing because of being stolen or left behind, or to prevent unintentional wrong key entries when carrying the portable telephone into a bag and the like (e.g., see Non-Patent Document 1).

In this type of portable telephone, by pressing a preset combination of keys or by selecting a dial lock function item on an operationmenu or setting menu, the dial lock function becomes effective and key entries except an entry of personal identification codes used for unlocking becomes invalid immediately.

<Non-Patent Document 1> "Dial Lock to Prevent Wrong Operation" (NTTDocomo(R), Mover N504i Operation Manual, Basics, P. 20, April, 2002)

Furthermore, it is referred to US 2002/058527 A1 showing a portable telephone of the art.

The above-mentioned conventional portable telephones come with the dial lock function for preventing unauthorized use when they are missing or for preventing operation mistakes made when being stored somewhere. They force users to remember a combination of keys for making the function effective or to find the dial lock function item from the operation menu or setting menu every time of setting the function.

Therefore, due to the nuisance of such a setting operation, there are not many users who attempt to utilize the dial lock function by conducting the burdensome operation even if they recognize that their own portable telephones have the dial lock function.

The present invention was proposed to address the foregoing problem and an object thereof resides in providing a portable telephone of which a dial lock function may be made effective by simple operations, and an auto dial lock method employed for the portable telephone.

### SUMMARY OF THE INVENTION

A portable telephone according to the present invention is a portable telephone according to claim 1.

An auto dial lock method according to the present invention is an auto dial lock method according to claim 11.

That is, the portable telephone of the present invention in which an upper case equipped with a display unit and a lower case equipped with a key operation unit are connected with each other, executes dial lock for invalidating key entries except at least an entry of personal identification codes used for unlocking in the key operation unit, when a preset setting time has elapsed since the upper and lower cases overlapped each other while a terminal of the portable telephone is in a wait state for incoming and outgoing calls. Therefore, with the portable telephone of the present invention, once the auto dial lock is set which is automatically activated in response to an operation for bringing the upper and lower cases into an overlapping state and a release operation of the overlapping state, the dial lock is automatically activated to the key operation unit, thus eliminating the need for users to perform burdensome setting operations each time needed and allowing them to make the dial lock function effective with simple operations.

The operation for bringing the upper and lower cases into the overlapping state and the release operation of the state correspond to, in the case of a rotary type portable telephone in which the upper cases is connected to the lower case via a joining part so as to be rotated along a key operation face of the key operation unit, a rotary operation of the both cases.

Moreover, with the portable telephone of the present invention, when a previously set predetermined operation is performed before the setting time elapses, the elapse of the setting time is once cleared and then recounted. Therefore, once the auto dial lock is set, the dial lock is automatically activated to the key operation unit even when the predetermined operation is performed in the course of the count of the setting time, thus eliminating the need for users to perform burdensome setting operations each time needed and allowing them to make the dial lock function effective with simple operations.

According to the present invention, in a portable telephone which has a first case including a key operation unit and has a second case connected to the first case, the dial lock is activated to invalidate key entries except at least an entry of personal identification codes used for unlocking in the key operation unit, when a preset setting time has elapsed since the detection of the state that the first and second cases overlap each other and a release of the state while a terminal of the portable telephone is in a wait state for incoming and outgoing calls, thereby providing an advantage of making a dial lock function effective with simple operations.

Preferred embodiments of the telephone and the method are contained in the dependent claims.

### BRIEF DESCRIPTION OF THE DRAWINGS

FIG. 1 is a block diagram showing a configuration of a foldable type portable telephone as comparative example to an embodiment of the present invention;
FIGS. 2A to 2D are diagrams showing one example of an auto dial lock setting procedure for the foldable type portable telephone as comparative example to an embodiment of the present invention;
FIG. 3 is a flowchart exemplarily showing an auto dial lock process of the foldable type portable telephone;
FIG. 4 is a flowchart exemplarily showing an auto dial lock process of the foldable type portable telephone;
FIG. 5 is a block diagram showing exemplarily a configuration of the foldable type portable telephone;
FIG. 6 is a flowchart exemplarily showing an auto dial lock setting procedure for the foldable type portable telephone;
FIGS. 7A to 7C are diagrams showing operations during time in use of a rotary type portable telephone according to an embodiment of the present invention;
FIG. 8 is a block diagram showing a configuration of the rotary type portable telephone according to the embodiment of the present invention;
FIGS. 9A and 9B are diagrams showing exemplarily operations during time in use of a slide storage type portable telephone.
FIGS. 10A and 10B are diagrams showing exemplarily operations during time in use of the slide storage type portable telephone; and
FIG. 11 is a block diagram showing exemplarily a configuration of the slide storage type portable telephone.

### DETAILED DESCRIPTION OF THE PREFERRED EMBODIMENTS

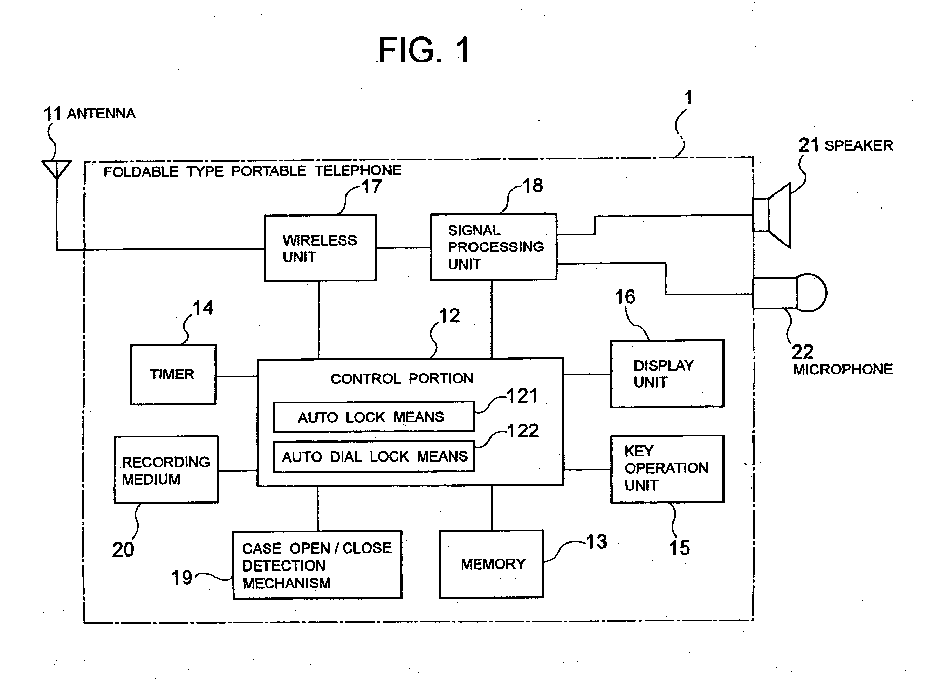

Embodiments of the present invention will be described with reference to the drawings. FIG. 1 is a block diagram showing a configuration of a foldable type portable telephone according to a first comparative example. It will be observed from FIG. 1 that a foldable type portable telephone 1 is configured with an antenna 11, a control unit 12, a memory 13, a timer 14, a key operation unit 15, a display unit 16, a wireless unit 17, a signal processing unit 18, a case open/close detection mechanism 19, a recording medium 20, a speaker 21, and a microphone 22, and has an upper case (not shown) equipped with the display unit 16 and a lower case (not shown) equipped with the key operation unit 15 which are connected with each other in a freely openable and closable manner by using a hinge and the like.

The antenna 11 is operable to transmit and receive radio waves, the key operation unit 15 is operable for a user to perform operations for various settings and personal identification codes, or operations for incoming and outgoing calls, and the display unit 16 is operable to display operation menus when the user performs the operations for various settings and personal identification codes, or operations for incoming and outgoing calls. The wireless unit 17 is operable to execute wireless-related processing, and the signal processing unit 18 is operable to process receiving and transmitting signals. The speaker 21 is operable to output received sounds, and the microphone 22 is operable to receive sound inputs.

The control unit 12 is connected to and controls each of the memory 13, the timer 14, the key operation unit 15, the display unit 16, the wireless unit 17, and the signal processing unit 18. In addition, the control unit 12 includes dial lock means 121 for activating, to the key operation unit 15, dial lock for invalidating key entries except an entry of the personal identification codes or the like, and auto dial lock means 122 for automatically activating the dial lock (hereinafter referred to as auto dial lock) to the key operation unit 15 in response to opening and closing operations of the upper and lower cases.

The opening and closing operations of the upper and lower cases are detected by the case open/close detection mechanism 19. This detection is effected by using techniques of detecting such opening operation and closing operations of the upper and lower cases with the aid of, for example, a magnet or an ON/OFF type microswitch.

The memory 13 stores various setting information, personal identification codes, and the like. The timer 14, when activated by the control unit 12, starts counting the elapse of time and notifies the control unit 12 that the time is up when a specified time has elapsed. The recording medium 20 stores a program (a computer-executable program) for realizing processing in each of the above units, so that the control unit 12 may control the above units by executing the program stored in the recordingmedium 20.

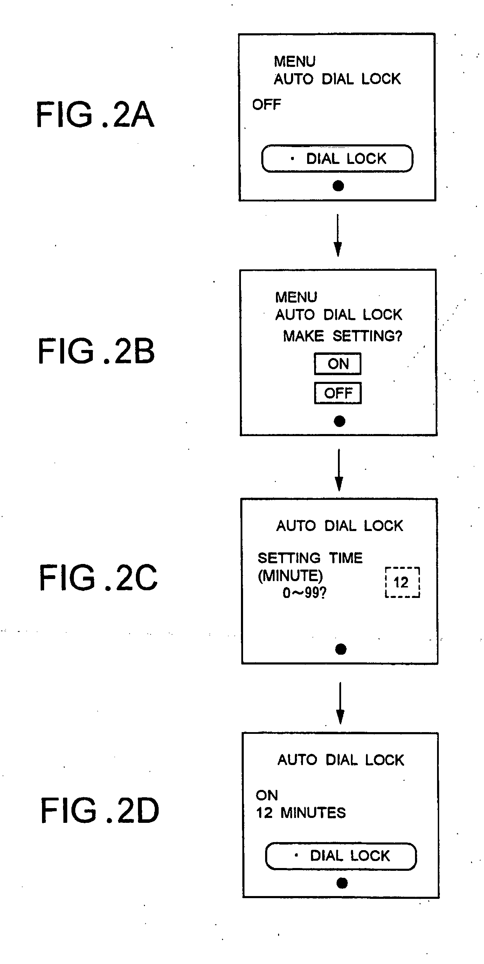

FIGS. 2A to 2D are diagrams showing one example of an auto dial lock setting procedure for the foldable type portable telephone 1 according to the first comparative example. Referring to these drawings, the description will be made for the auto dial lock setting procedure for the foldable type portable telephone 1.

First, when the auto dial lock of the foldable type portable telephone 1 is set, the auto dial lock is selected on a menu screen of the display unit 16 (see FIG. 2A), and is then set on a setting screen of the display unit 16 (see FIG. 2B).

In this case, when a setting time N (N is 12 minutes in the example shown on the drawing) is specified on the setting screen where the setting time until the activation of the auto dial lock is to be entered (see FIG. 2C), the display unit 16 displays that the auto dial lock is initiated after 12 minutes (see FIG. 2D). In FIG. 2C, the setting time N is selected from 0 to 99 minutes, however, this is merely one example and the setting time N may alternatively be longer than 99 minutes. If the setting time N is set to 0 minute, the auto dial lock is activated immediately after the case open/close detection mechanism 19 detects a closed state of the upper and lower cases.

Subsequently, the foldable type portable telephone 1 goes into a wait state for incoming and outgoing calls, that is, an incoming and outgoing call waiting state other than a halfway state of some sort of operations or an input-wait state for such operations. When the case open/close detection mechanism 19 detects the closed state of the upper and lower cases and the timer 14 then notifies the control unit 12 that the setting time has elapsed, the auto dial lock means 122 executes the auto dial lock.

On the other hand, when personal identification codes used for unlocking are entered from the key operation unit 15, the auto dial lock being executed by the auto dial lock means 122 is released. The foldable type portable telephone 1 again goes into the wait state, and when the setting time has elapsed after the detection of the upper and lower case closed state by the case open/close detection mechanism 19, the auto dial lock is executed without the need of newly setting the same.

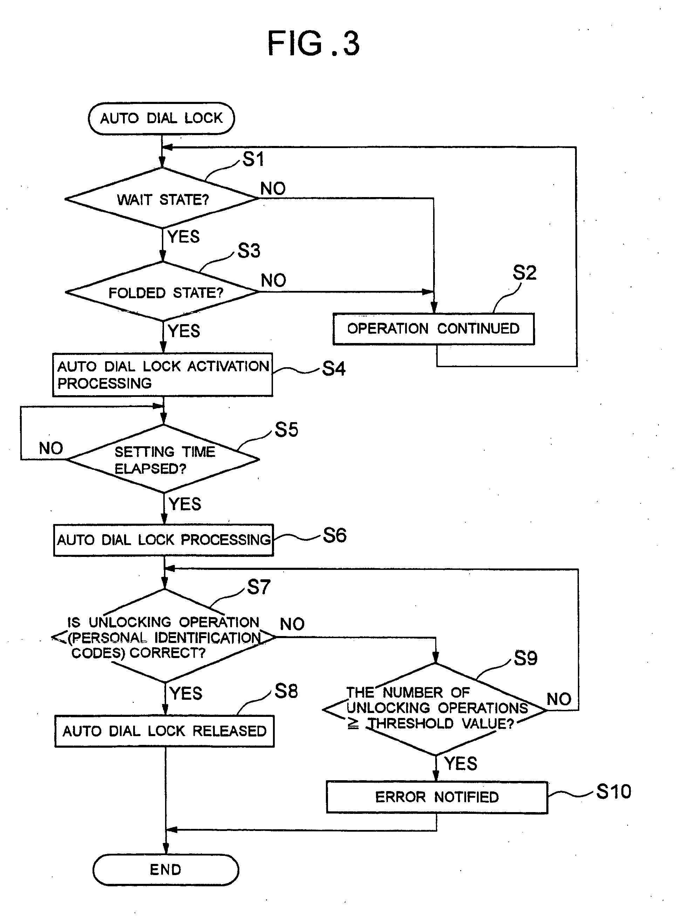

FIG. 3 is a flowchart exemplarily showing an auto dial lock process of the foldable type portable telephone 1 according to the first comparative example. Referring to FIGS. 1 to 3, next paragraphs will deal with the auto dial lock process of the foldable type portable telephone 1 according to the first comparative example.

When the auto dial lock is set, the control unit 12 in the foldable type portable telephone 1 determines whether the telephone 1 is in the wait state for incoming and outgoing calls on the basis of each operation state of the key operation unit 15, the display unit 16, the wireless unit 17, and the signal processing unit 18 (Step S1 in FIG. 3). When determining that the telephone 1 is in anon-wait state, the control unit 12 continues each unit on operations thereof (Step S2 in FIG. 3). It is to be noted here that the "non-wait state" may conceivably include states during telephone conversation, during creation of a transmission mail, during perusal of a received mail, during Internet surfing, during confirmation/setting of various setting items, during composition of a ringer melody, or the like.

When determining that the telephone 1 is in the wait state, the control unit 12 continues each unit on operations thereof (step S2 in FIG. 3) if the opened state of the upper and lower cases is detected by the case open/close detection mechanism 19 (step S3 in FIG. 3). If the closed state is detected by the case open/close detection mechanism 19 (step S3 in FIG. 3 ) , the control unit 12 executes activation processing of the auto dial lock means 122 (step S4 in FIG. 3).

When the setting time entered at the time of setting the auto dial lock has elapsed (step S5 in FIG. 3), the control unit 12 controls the auto dial lock means 122 so that it activates the auto dial lock processing for the key operation unit 15 (step S6 in FIG. 3). After this processing, the key operation unit 15 in the foldable type portable telephone 1 accepts only a key entry of personal identification codes for unlocking.

In the foldable type portable telephone 1, when the personal identification codes used for unlocking are entered from the key operation unit 15 and the codes agree with those previously set (when the personal identification codes are correct) (step S7 in FIG. 3), the control unit 12 releases the auto dial lock of the auto dial lock means 122 (step S8 in FIG. 3).

When the personal identification codes used for unlocking which are entered from the key operation unit 15 do not agree with those previously set (when the personal identification codes are incorrect) (step S7 in FIG. 3) and furthermore, when the number of the unlocking operations is below a preset threshold value (step S9 in FIG. 3), the control unit 12 returns the process to step S7. Contrary to this when the number of the unlocking operations reaches or exceeds the threshold value (step S9 in FIG. 3), the control unit 12 notifies users of an error and turns a battery off to maintain the state that the auto dial lock is still effective (step S10 in FIG. 3).

In this example, as described above, once the auto dial lock is set, it is automatically activated to the key operation unit 15 when the setting time has elapsed since the detection of the closed state of the upper and lower cases while the foldable type portable telephone 1 is in the wait state, thus eliminating the need for users to perform burdensome setting operations each time needed and allowing them to make the dial lock function effective with simple operations.

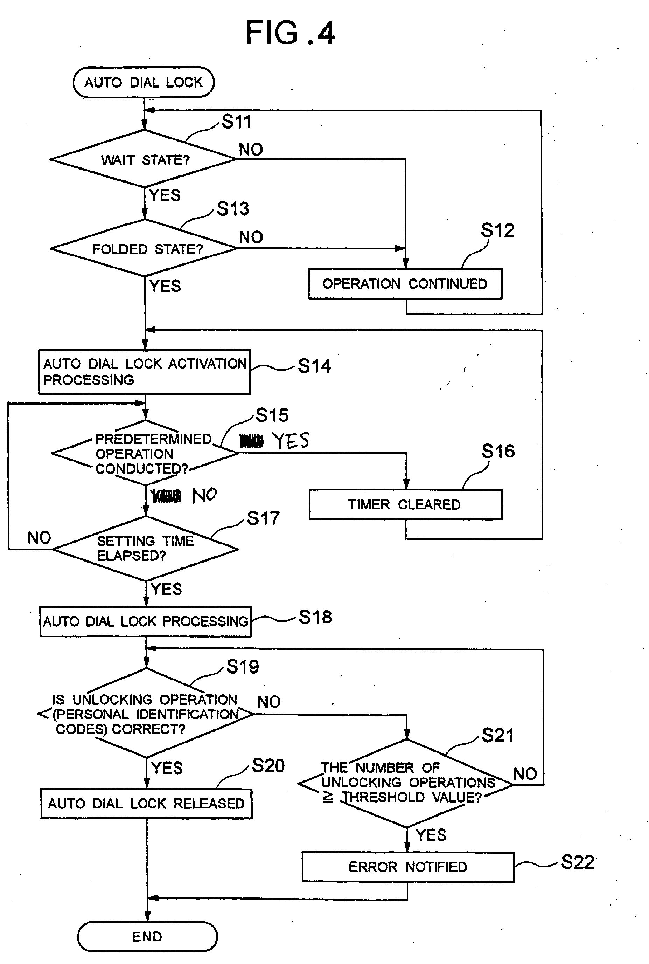

FIG. 4 is a flowchart exemplarily showing an auto dial lock process of the foldable type portable telephone according to a second example. Since the foldable type portable telephone according to the second example of the present invention has the same configuration as that of the foldable type portable telephone 1 according to the first example shown in FIG. 1, these FIGS. 1 and 4 will be referred to explain the auto dial lock process of the foldable type portable telephone 1 according to the second example.

When the auto dial lock is set , the control unit 12 of the foldable type portable telephone 1 determines whether the telephone 1 is in the wait state for incoming and outgoing calls on the basis of each operation state of the key operation unit 15, the display unit 16, the wireless unit 17, and the signal processing unit 18 (step S11 in FIG. 4). When determining that the telephone 1 is in the non-wait state, the control unit 12 continues each unit on operations thereof (step S12 in FIG. 4).

When determining that the telephone 1 is in the wait state, the control unit 12 continues each unit on operations thereof (step S12 in FIG. 4) if the opened state of the upper and lower cases is detected by the case open/close detection mechanism 19 (step S13 in FIG. 4). If the closed state is detected by the case open/close detection mechanism 19 (step S13 in FIG. 4), the control unit 12 executes activation processing of the auto dial lock means 122 (step S14 in FIG. 4).

When a predetermined operation previously set is performed before the setting time entered at the time of setting the auto dial lock elapses (step S15 in FIG. 4), the control unit 12 clears the timer 14 (step 16 in FIG. 4) and returns the process to step S15. It is to be noted here that the predetermined operation includes an operation of shifting the upper and lower cases from the closed state to the opened state, an operation of pressing a side key (not shown) down, an operation of connecting an external connection device to an external connection terminal, or the like. When any of these operations is made, the control unit 12 once clears the timer 14 and returns the process to step S14 so that the timer 14 starts counting again.

When the setting time entered at the time of setting the auto dial lock has elapsed (step S17 in FIG. 4), the control unit 12 controls the auto dial lock means 122 so that it activates the auto dial lock processing for the key operation unit 15 (step S18 in FIG. 4). After this processing, the key operation unit 15 in the foldable type portable telephone 1 accepts only a key entry of personal identification codes for unlocking.

In the foldable type portable telephone 1, when the personal identification codes used for unlocking are entered from the key operation unit 15 and the codes agree with those previously set (when the personal identification codes are correct) (step S19 in FIG. 4), the control unit 12 releases the auto dial lock of the auto dial lock means 122 (step S20 in FIG. 4).

When the personal identification codes used for unlocking which are entered from the key operation unit 15 do not agree with those previously set (when the personal identification codes are incorrect) (step S19 in FIG. 4) and furthermore, when the number of the unlocking operations is below a preset threshold value (step S21 in FIG. 4), the control unit 12 returns the process to step S19. Contrary to this when the number of the unlocking operations reaches or exceeds the threshold value (step S22 in FIG. 4), the control unit 12 notifies users of an error and turns a battery off to maintain the state that the auto dial lock is still effective (step S23 in FIG. 4).

In this example, as described above, once the auto dial lock is set, it is automatically activated to the key operation unit 15 when the setting time has elapsed since the detection of the closed state of the upper and lower cases while the foldable type portable telephone 1 is in the wait state, even if the predetermined operation is performed in the course of counting by the timer 14, thus eliminating the need for users to perform burdensome setting operations each time needed and allowing them to make the dial lock function effective with simple operations.

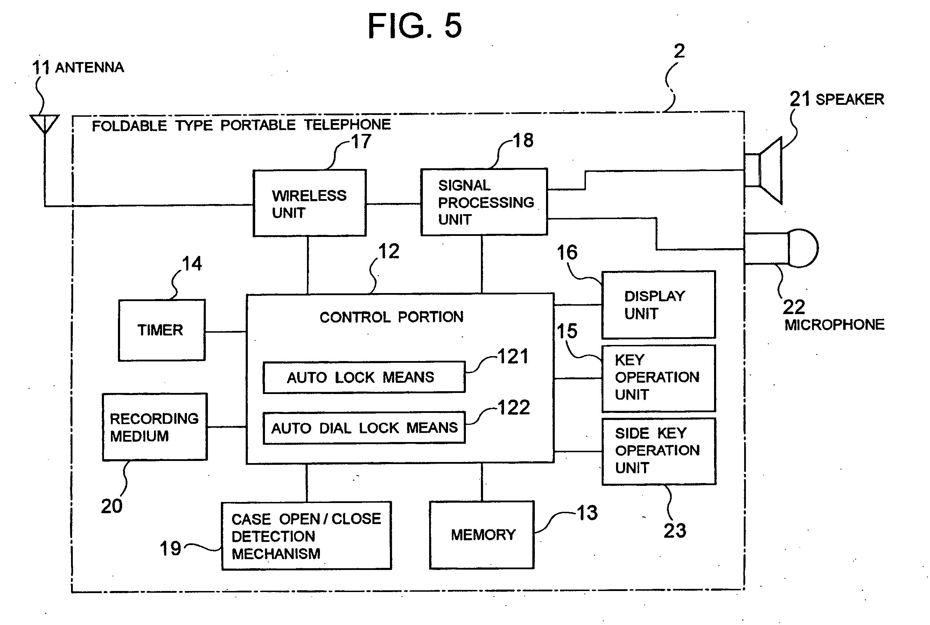

FIG. 5 is a block diagram showing a configuration of a foldable type portable telephone according to a third example. It will be observed from FIG. 5 that a foldable type portable telephone 2 according to the third example has the same configuration as that of the foldable type portable telephone 1 according to the first example shown in FIG. 1 except that it is provided with a side key operation unit (side key) 23 in addition to the key operation unit 15, and that the same reference numerals are allocated to the same components. Furthermore, operations of the same components are identical to those in the first example.

The side key operation unit 23 is to be operated during the closed state of the upper and lower cases, and for example, even when the counting of the elapse of time is started for the setting time until the activation of the auto dial lock to the key operation unit 15, a pressing operation onto the side key operation unit 23 may trigger a reset of the counted time and a restart of counting the setting time from 0 second.

Accordingly, in this example, even in the closed state of the upper and lower cases, the setting time elapsing until the auto dial lock is activated may be elongated by the pressing the side key operation unit 23.

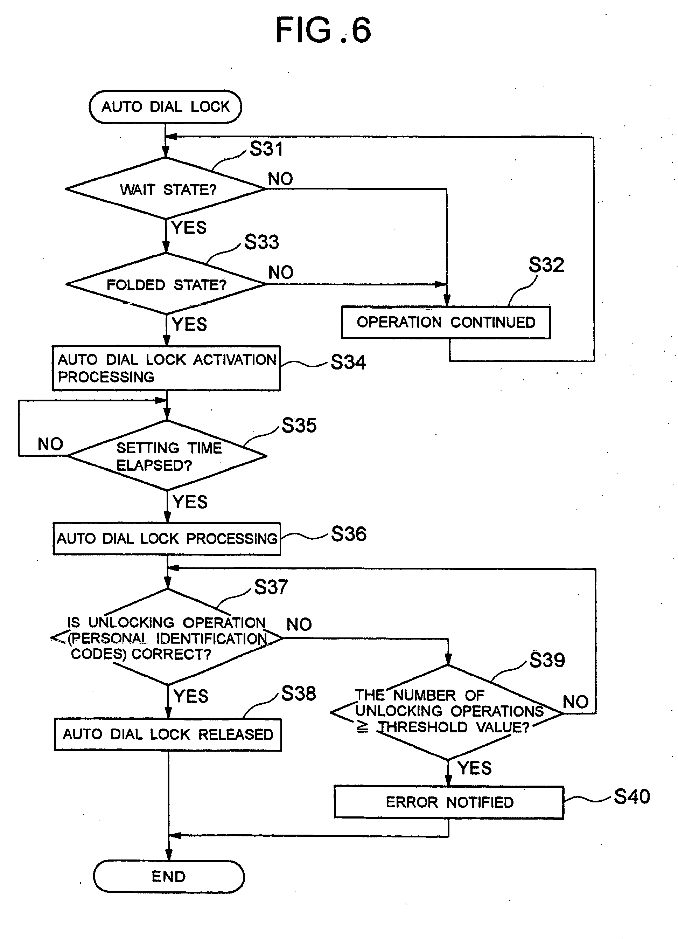

FIG. 6 is a flowchart exemplarily showing an auto dial lock process of the foldable type portable telephone according to a fourth example. Since the foldable type portable telephone according to the fourth example has the same configuration as that of the foldable type portable telephone 1 according to the first example shown in FIG. 1, these FIGS. 1 and 6 will be referred to explain the auto dial lock process of the foldable type portable telephone 1 according to the fourth example of the present invention.

When the auto dial lock is set , the control unit 12 of the foldable type portable telephone 1 determines whether the telephone 1 is in the wait state for incoming and outgoing calls on the basis of each operation state of the key operation unit 15, the display unit 16, the wireless unit 17 and the signal processing unit 18 (step S31 in FIG. 6).

When determining that the telephone 1 is in the non-wait state, the control unit 12 continues each unit on operations thereof (step S32 in FIG. 6). It is to be noted here that the "non-wait state" may conceivably include during telephone conversation, during creation of a transmission mail, during perusal of a received mail, during Internet surfing, during confirmation/setting of various setting items, during composition of a ringer melody, or the like.

When determining that the telephone 1 is in the wait state, the control unit 12 continues each unit on operations thereof (step S32 in FIG. 6) if the closed state of the upper and lower cases is detected by the case open/close detection mechanism 19 (step S33 in FIG. 6).

If the opened state is detected by the case open/close detection mechanism 19 (step S33 in FIG. 6), the control unit 12 executes activation processing of the auto dial lock means 122 (step S34 in FIG. 6).

When the setting time entered at the time of setting the auto dial lock has elapsed (step S35 in FIG. 6), the control unit 12 controls the auto dial lock means 122 so that it activates the auto dial lock processing for the key operation unit 15 (step S36 in FIG. 6) . After this processing, the key operation unit 15 in the foldable type portable telephone 1 accepts only a key entry of personal identification codes for unlocking.

In the foldable type portable telephone 1, when the personal identification codes used for unlocking are entered from the key operation unit 15 and the codes agree with those previously set (when the personal identification codes are correct)(step S37 in FIG. 6), the control unit 12 releases the auto dial lock of the auto dial lock means 122 (step S38 in FIG. 6).

When the personal identification codes used for unlocking which are entered from the key operation unit 15 do not agree with those previously set (when the personal identification codes are incorrect) (step S37 in FIG. 6) and furthermore, when the number of the unlocking operations is below a preset threshold value (step S39 in FIG. 6), the control unit 12 returns the process to step S37. Contrary to this when the number of the unlocking operations reaches or exceeds the threshold value (step S39 in FIG. 6), the control unit 12 notifies users of an error and turns a battery off to maintain the state that the auto dial lock is still effective (step S40 in FIG. 6).

In this example, as described above, once the auto dial lock is set, it is automatically activated to the key operation unit 15 when the setting time has elapsed since the detection of the opened state of the upper and lower cases while the foldable type portable telephone 1 is in the wait state, which enables the auto dial lock even in the opened state. This eliminates the need for users to perform burdensome setting operations each time needed and allows them to make the dial lock function effective with simple operations.

While the above mentioned first to fourth examples dealt with only the foldable type portable telephone in which the upper case and lower case are joined with each other by hinges and the like so as to provide successful opening and closing operations, however, the functional operations described in each of the above examples are applicable also to a rotary type portable telephone in which the upper and lower cases are joined with each other by hinges and the like to provide a rotary operation, a. slide storage type portable telephone in which the upper and lower cases provide a sliding operation relative to each other; or the like.

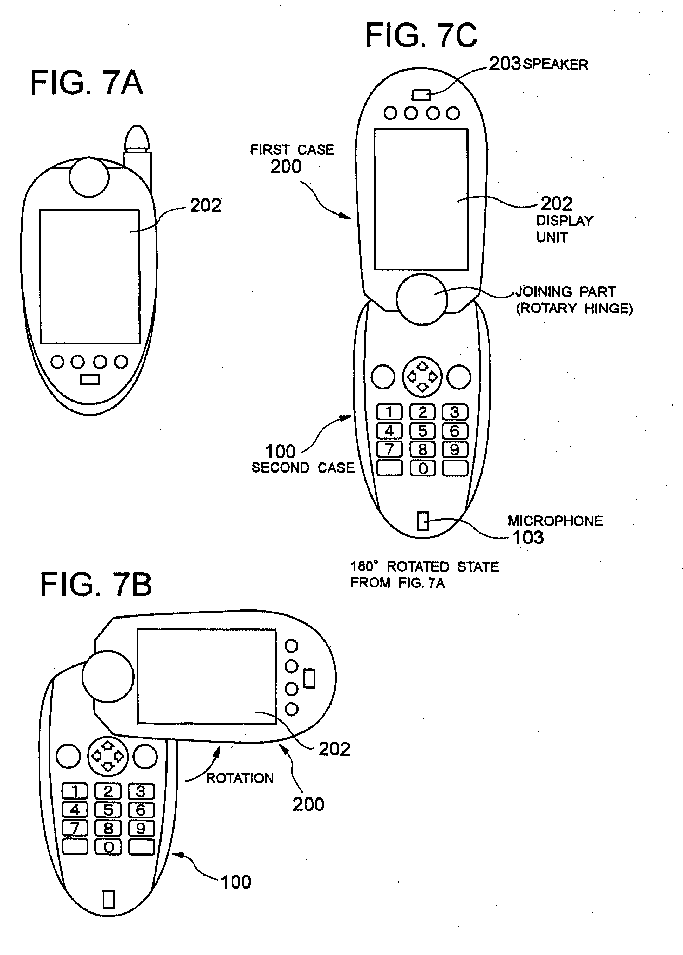

FIGS. 7A to 7C are diagrams showing operations during time in use of the rotary type portable telephone according to an embodiment of the present invention. FIG. 7A shows a state in which a first case 200 and a second case 100 overlap each other in the rotary type portable telephone according to the embodiment of the present invention, FIG. 7B shows a state in which the first case 200 is turned 90° relative to the second case 100, and FIG. 7C shows a state in which the first case 200 is turned another 90°relative to the second case 100, that is, a state in which the first case 200 is turned 180° from the state shown in FIG. 7A.

As shown in FIGS. 7A to 7C, the first case 200 and the second case 100 are rotatably connected with each other via the joining part (rotary hinge) with the first case 200 being provided with a display unit 202 and a speaker 203 and the second case 100 being provided with a microphone 103.

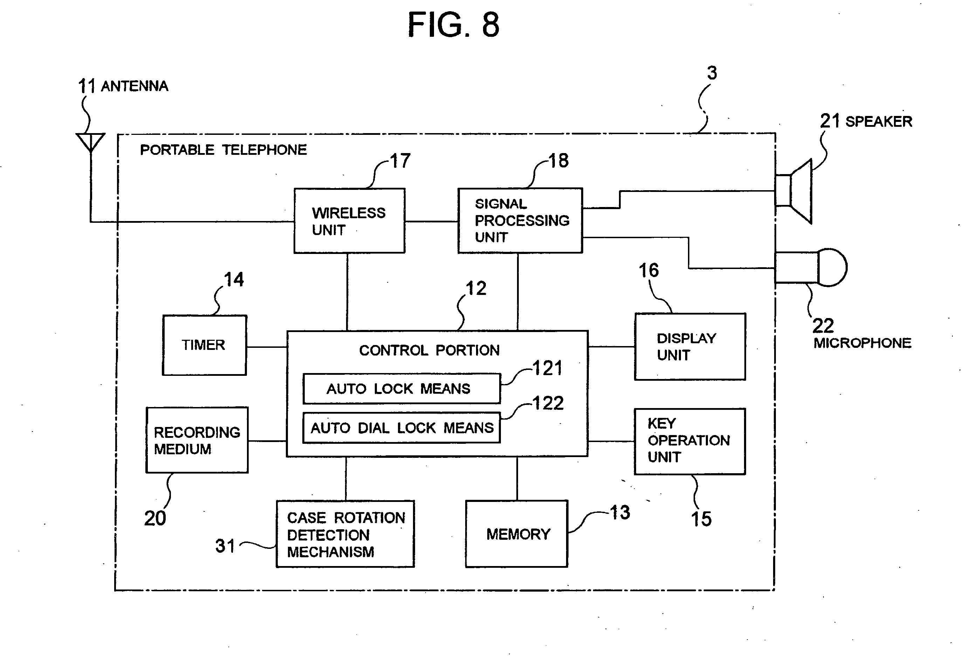

FIG. 8 is a block diagram showing a configuration of the rotary type portable telephone according to the embodiment of the present invention. It will be observed from FIG. 8 that a rotary type portable telephone 3 according to the embodiment has the same configuration as that of the foldable type portable telephone 1 according to the first example shown in FIG. 1 except that it includes a case rotation detection mechanism 31 in place of the case open/close detection mechanism 19, and that the same reference numerals are allocated to the same components. Furthermore,operations of the same components are identical to those in the first example of the present invention.

The case rotation detection mechanism 31 detects a rotary operation of the first case 200 and the second case 100 shown in FIG. 7. The detection of the rotary operation by the case rotation detection mechanism 31 is effected by detecting a position of a pin (not shown) that rotates interlockingly with the rotary operation of the first case 200, whereby it can be detected that which one of positional relationships of FIG. 7A, 7B and 7C corresponds to a relative position of the first and second cases. Note here that it is possible to use a magnet in order to detect the relative position of the first case 200 and the second case 100.

In the rotary type portable telephone 3 according to the embodiment, an overlapping state of the first case 200 and the second case 100 (see FIG. 7A) is detected by the case rotation detection mechanism 31 and thereafter the timer 14 notifies the control unit 12 that the setting time has elapsed. Upon receipt of the notification, the auto dial lock means 122 executes the auto dial lock.

In this embodiment, as described above, once the auto dial lock is set , it is automatically activated to the key operation unit 15 when the setting time has elapsed since the detection by the case rotation detection mechanism 31 of the overlapping state of the first case 200 and the second case 100 (shown in FIG. 7A) or since the detection of the states shown in FIGS. 7B and 7C while the rotary type portable telephone 3 is in the wait state, thus eliminating the need for users to perform burdensome setting operations each time needed and allowing them to make the dial lock function effective with simple operations.

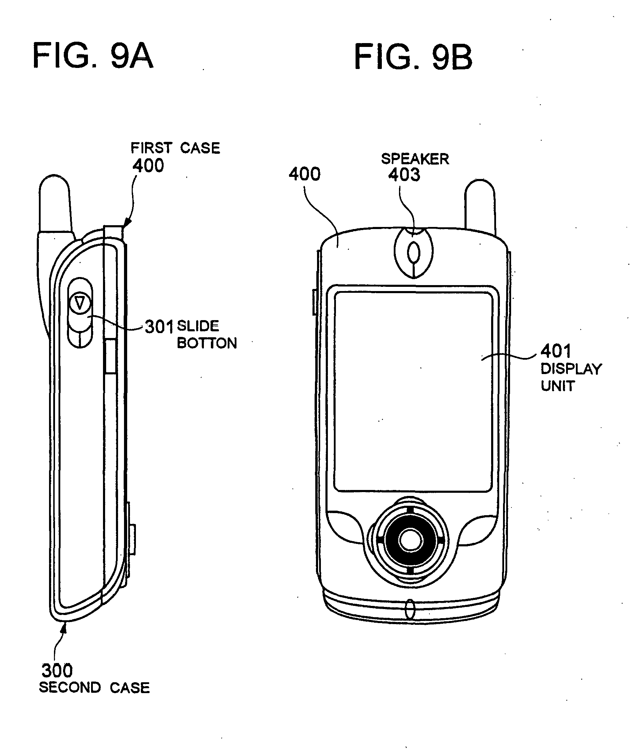

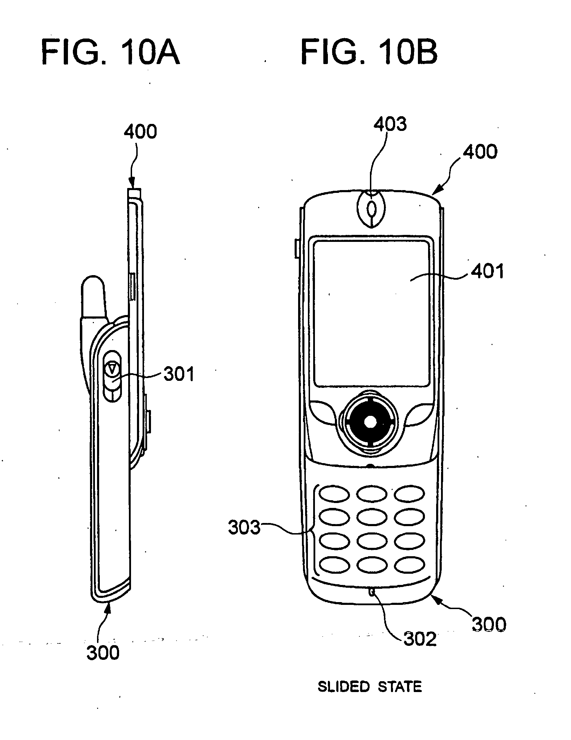

FIGS. 9A to 9B and FIGS. 10A to 10B are diagrams showing operations during time in use of a slide storage type portable telephone according to a sixth example. FIGS. 9A and 9B show a state in which a first case 400 and a second case 300 overlap each other, that is, a state in which the second case 300 is received by the first case 400, and FIGS. 10A and 10B show a state in which the second case 300 is drawn out by sliding it from the first case 400, in the slide storage type portable telephone according to the sixth example.

It will be observed from FIGS. 10A and 10B that the first case 400 and the second case 300 are slidably connected to each other by a rail mechanism (not shown) or the like with the first case 400 being provided with a display unit 401 and a speaker 403 and the second case 300 being provided with a slide button 301, a microphone 302 and key arrays 303.

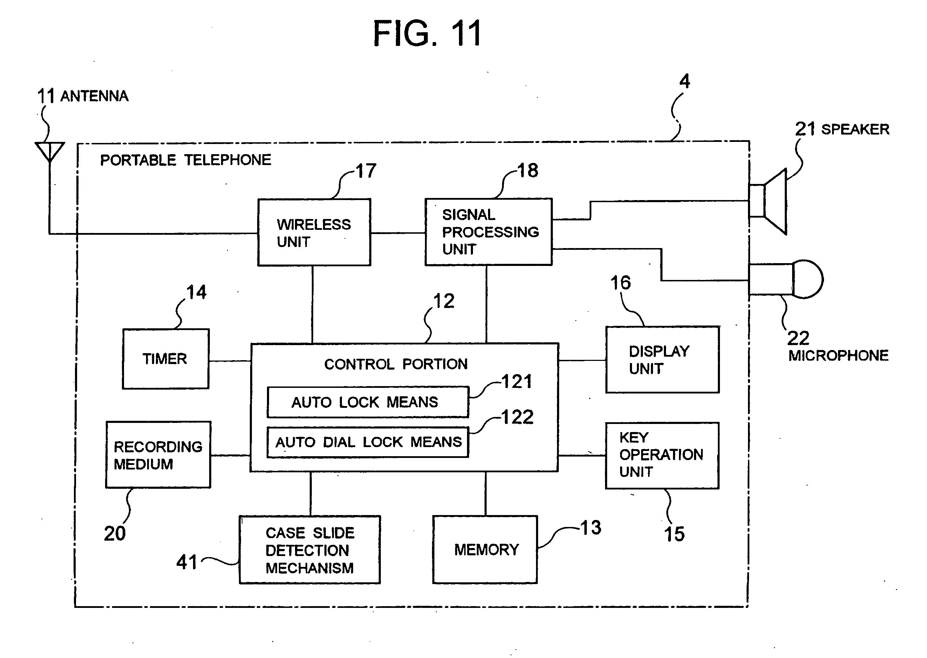

FIG. 11 is a block diagram showing a configuration of the slide storage type portable telephone according to the sixth example. As shown in FIG. 11, a slide storage type portable telephone 4 according to the sixth example has the same configuration as that of the foldable type portable telephone 1 according to the first example shown in FIG. 1 except that it is provided with a case slide detection mechanism 41 in place of the case open/close detection mechanism 19, and the same reference numerals are allocated to the same components. Furthermore, operations of the same components are identical to those in the first embodiment.

The case slide detection mechanism 41 detects the sliding operation of the second case 300 with respect to the first case 400 which is shown in FIGS. 9 and 10. The detection of the sliding operation by the case slide detection mechanism 41 is effected by detecting a position of a pin (not shown) that slides interlockingly with the sliding operation of the second case 300 , whereby it can be detected that which one of positional relationships of FIGS. 9A and 9B and FIGS. 10A and 10B corresponds to a relative position of the first case 400 and the second case 300. Note here that it is possible to use a magnet in order to detect the relative position of the first case 400 and the second case 300.

In the slide storage type portable telephone 4 according to the sixth example, the overlapping state of the first case 400 and the second case 300 (see FIGS. 9A and 9B) is detected by the case slide detection mechanism 41 and thereafter the timer 14 notifies the control unit 12 that the setting time has elapsed. Upon receipt of the notification, the auto dial lock means 122 executes the auto dial lock.

In this example, as described above, once the auto dial lock is set , it is automatically activated to the key operation unit 15 when the setting time has elapsed since the case slide detection mechanism 41 detected the overlapping state of the first case 400 and the second case 300 (FIGS. 9A and 9B) or the state shown in FIGS. 10A and 10B while the slide storage type portable telephone 4 is in the wait state, thus eliminating the need for users to perform burdensome setting operations each time needed and allowing them to make the dial lock function effective with simple operations.

It is alternatively possible in this invention to combine the aforementioned examples and embodiment one another, and the present invention is not limited to the above examples and embodiment. When the above examples and embodiment are used in combination, the setting from the outside is to be made possible for one or both of the opened state and closed state of the upper case and the lower case, one or both of the overlapping state and a release thereof between the first case 200 and the second case 100 , or one or both of the overlapping state and a release thereof between the first case 400 and the second case 300.

## Claims

1. A portable telephone having a first case (200) and a second case (100) connected to said first case and including a key operation unit (15), comprising:
determination means (12) for determining whether the portable telephone is in a wait state for incoming and outgoing calls;
detection means (31) for detecting a positional state of said first and second cases (100, 200) relative to each other;
time counting means for counting a preset setting time upon a detection by said detection means (31) of the positional state of the first and second cases (100, 200); and
means for, when said determination means (12) determines to be in the wait state and then the time counting means (14) detects that the setting time has elapsed, invalidating key entries except at least an entry of personal identification codes in said key operation unit (15),
**characterized in that** said second case (100) is rotatably connected to said first case (200) via a joining part so as the first case (200) is rotatable along a key operation face of said key operation unit (15), and
**in that** the detection means (31) is adapted to detect a rotary operation of the first case (200), wherein the detection is effected by detecting a position of a pin that rotates interlockingly with the first case (200), whereby different relative positions of the first and second cases (100, 200) are detectable.

2. The portable telephone according to claim 1, wherein
in said positional state said first case (200) and said second case (100) overlap each other.

3. The portable telephone according to claim 2, wherein said detection means (31) detects either one of a state that said first and second cases (100, 200) overlap each other and a release of the state that said first and second cases (100, 200) overlap each other, as the positional state.

4. The portable telephone according to claim 3, wherein said detection means (31) detects a state that said second case (100) is rotated by a predetermined amount around the joining part relative to said first case (200), as the release of the sate that said first and second cases overlap each other.

5. The portable telephone according to claim 1, wherein said means for invalidating key entries invalidates the key entries when setting information is preset to automatically inhibit the key entries in said key operation unit (15).

6. The portable telephone according to claim 1, wherein, a previously set predetermined operation is performed before the setting time elapses, said time counting means (14) once clears the count of time and then restarts counting the setting time.

7. The portable telephone according to claim 1 further comprising:
means for setting the setting time in accordance with instruction information from outside.

8. The portable telephone according to claim 1, wherein, when the previously set predetermined operation is performed before the setting time elapses, said time counting means (14) once clears the detection of elapse of the setting time and then restarts detecting elapse of the setting time.

9. The portable telephone according to claim 6 or 8, wherein, when the predetermined operation is performed through a side key, said time counting means (14) once clears the detection of elapse of the setting time and then restarts detecting elapse of the setting time.

10. The portable telephone according to claim 1, wherein the positional state is at least either one of the opened state and the closed state of said first and second cases (100, 200).

11. An auto dial lock method for a portable telephone having a first case (200) and a second case (100) connected to said first case (200) and including a key operation unit (15), wherein said second case (100) is connected to said first case (200) via a joining part; the method comprising:
a first step of determining whether the portable telephone is in a wait state for incoming and outgoing calls;
a second step of detecting a positional state of said first and second cases (100, 200) relative to each other;
a third step of determining whether a preset setting time has elapsed since the detection of the positional state; and
a fourth step of, when determined to be in the wait state and then detected that the setting time has elapsed, invalidating key entries except at least an entry of personal identification codes in said key operation unit, **characterized in that** the first case (200) is rotatable along a key operation face of said key operation unit (15), and that said second step includes detecting a state that said first case (100) is rotated by a predetermined amount around the joining part relative to said second case (200), by detecting a position of a pin that rotates interlockingly with the first case (200), whereby different relative positions of the first and second cases (100, 200) are detectable.

12. The auto dial lock method according to claim 11, wherein
in said positional state said first and second cases (100, 200) overlap each other.

13. The auto dial lock method according to claim 11, wherein said fourth step includes invalidating the key entries when setting information is preset to automatically inhibit the key entries in said key operation unit.

14. The auto dial lock method according to claim 11, wherein said step of invalidating key entries includes invalidating the key entries when setting information is preset to automatically inhibit the key entries in said key operation unit.

15. The auto dial lock method according to claim 11, wherein, when a previously set predetermined operation is performed before the setting time elapses, the detection of elapse of the setting time is once cleared and then restarted.

16. The auto dial lock method according to claim 15, wherein, when the predetermined operation is performed through a side key, the detection of elapse of the setting time is once cleared and then restarted.

17. The auto dial lock method according to claim 11, wherein the positional state is at least either one of the opened state and the closed state of said first and second cases (100, 200).

## Patentansprüche

1. Tragbares Telefon mit einem ersten Gehäuse (200) und einem zweiten Gehäuse (100), das mit dem ersten Gehäuse verbunden ist und eine Tastenbetätigungseinheit (15) aufweist, mit:
Bestimmungsmitteln (12) zum Bestimmen, ob das tragbare Telefon in einem Wartezustand für eingehende und ausgehende Anrufe ist,
Detektionsmitteln (31) zum Detektieren eines Positionszustandes des ersten und des zweiten Gehäuses (100, 200) relativ zueinander,
Zeitzählmitteln zum Zählen einer voreingestellten Einstellzeit bei einer Detektierung durch die Detektierungsmittel (31) des Positionszustandes des ersten und des zweiten Gehäuses (100, 200), und
Mittel zum Annullieren von Tasteneingaben mit Ausnahme von zumindest einer Eingabe eines persönlichen Identifikationscodes an der Tastenbetätigungseinheit (15), wenn die Bestimmungsmittel (12) den Wartezustand bestimmen und dann die Zeitzählmittel (14) erfassen, dass die Einstellzeit abgelaufen ist,
**dadurch gekennzeichnet, dass** das zweite Gehäuse (100) drehbar mit dem ersten Gehäuse (200) über einen Verbindungsteil derart verbunden ist, dass das erste Gehäuse (200) entlang einer Tastenbetätigungsfläche der Tastenbetätigungseinheit (15) drehbar ist, und
dass die Detektionsmittel (31) ausgebildet sind, um eine Drehbetätigung des ersten Gehäuses (200) zu erfassen, wobei die Erfassung durch eine Position eines Stiftes durchgeführt wird, der gekoppelt mit dem ersten Gehäuse (200) rotiert, wodurch unterschiedliche Relativpositionen des ersten und des zweiten Gehäuses (100, 200) erfasst werden können.

2. Tragbares Telefon nach Anspruch 1, wobei
in dem Positionszustand das erste Gehäuse (200) und das zweite Gehäuse (100) miteinander überlappen.

3. Tragbares Telefon nach Anspruch 2, wobei die Detektionsmittel (31) einen der Zustände erfassen, in dem das erste und das zweite Gehäuse (100, 200) miteinander überlappen und eine Freigabe des Zustandes, dass das erste und das zweite Gehäuse (100, 200) miteinander überlappen als Positionszustände.

4. Tragbares Telefon nach Anspruch 3, wobei die Detektionsmittel (31) einen Zustand erfassen, in dem das zweite Gehäuse (100) um einen vorgegebenen Betrag um den Verbindungsteil relativ zu dem zweiten Gehäuse (200) als Freigabe des Zustandes erfassen, in dem das erste und das zweite Gehäuse miteinander überlappen.

5. Tragbares Telefon nach Anspruch 1, wobei die Mittel zum Annullieren von Tasteneingaben die Tasteneingaben annullieren, wenn eine Einstellinformation voreingestellt ist, zum automatischen Verhindern von Tasteneingaben in der Tastenbetätigungseinheit (15).

6. Tragbares Telefon nach Anspruch 1, wobei eine voreingestellte vorgegebene Operation durchgeführt wird, bevor die Einstellzeit abläuft, die Zeitzählmittel (15) die gezählte Zeit löschen und dann das Zählen der Einstellzeit neu beginnen.

7. Tragbares Telefon nach Anspruch 1 mit ferner:
Mitteln zum Einstellen der Einstellzeit in Übereinstimmung mit Befehlsinformation von außerhalb.

8. Tragbares Telefon nach Anspruch 1, wobei, wenn die vorher eingestellte vorgegebene Operation durchgeführt wird, bevor die Einstellzeit abläuft, die Zählmittel (14) die Erfassung des Ablaufs der Einstellzeit löschen und dann das Erfassen des Ablaufs der Einstellzeit neu beginnen.

9. Tragbares Telefon nach Anspruch 6 oder 8, wobei, wenn der vorgegebene Vorgang über eine Seitentaste durchgeführt wird, die Zeitzählmittel (14) einmal die Erfassung des Ablaufs der Einstellzeit löschen und dann das Erfassen des Ablaufs der Einstellzeit neu beginnen.

10. Tragbares Telefon nach Anspruch 1, wobei der Positionszustand zumindest einer des geöffneten Zustandes und des geschlossenen Zustandes des ersten und des zweiten Gehäuses (100, 200) ist.

11. Selbstwählsperrverfahren für ein tragbares Telefon mit einem ersten Gehäuse (200) und einem zweiten Gehäuse (100), das mit dem ersten Gehäuse (200) verbunden ist und eine Tastenbetätigungseinheit (15) aufweist, wobei das zweite Gehäuse (100) mit dem ersten Gehäuse (200) über einen Verbindungsteil verbunden ist, wobei das Verfahren aufweist:
einen ersten Schritt der Erfassung, ob das tragbare Telefon in einem Wartezustand für eingehende und ausgehende Anrufe ist,
einem zweiten Schritt der Erfassung eines Positionszustandes des ersten und des zweiten Gehäuses (100, 200) relativ zueinander,
einem dritten Schritt zur Bestimmung, ob eine voreingestellte Einstellzeit seit der Erfassung des Positionszustandes abgelaufen ist, und
einem vierten Schritt der Annullierung von Tasteneingaben mit Ausnahme von zumindest der Eingabe eines persönlichen Identifikationscodes in der Tastenbetätigungseinheit, wenn der Wartezustand bestimmt wird und dann erfasst wird, dass die Einstellzeit abgelaufen ist, **dadurch gekennzeichnet, dass** das erste Gehäuse (200) drehbar entlang einer Tastenbetätigungsfläche der Tastenbetätigungseinheit (15) ist und dass der zweite Schritt die Erfassung eines Zustandes umfasst, in dem das erste Gehäuse (100) um einen vorgegebenen Betrag um den Verbindungsteil relativ zu dem zweiten Gehäuse (200) gedreht ist durch Erfassung einer Position eines Stiftes, der gekoppelt mit dem ersten Gehäuse (200) dreht, wodurch unterschiedliche Relativpositionen des ersten und des zweiten Gehäuses (100, 200) erfasst werden können.

12. Selbstwählsperrverfahren nach Anspruch 11, wobei
in dem Positionszustand das erste und das zweite Gehäuse (100, 200) miteinander überlappen.

13. Selbstwählsperrverfahren nach Anspruch 11, wobei der vierte Schritt das Annullieren der Tasteneingaben umfasst, wenn Einstellinformation zum automatischen Verhindern der Tasteneingaben in der Tastenbetätigungseinheit eingestellt ist.

14. Selbstwählsperrverfahren nach Anspruch 11, wobei der Schritt des Annullierens von Tasteneinträgen das Annullieren der Tasteneinträge umfasst, wenn Einstellinformation voreingestellt ist, um automatisch die Tasteneingaben in der Tastenbetätigungseinheit zu verhindern.

15. Selbstwählsperrverfahren nach Anspruch 11, wobei, wenn eine vorher eingestellte vorgegebene Betätigung durchgeführt wird, bevor die Einstellzeit abläuft, die Erfassung des Ablaufs der Einstellzeit einmal gelöscht und dann erneut gestartet wird.

16. Selbstwählsperrverfahren nach Anspruch 15, wobei, wenn der vorgegebene Vorgang über eine Seitentaste durchgeführt wird, die Erfassung des Ablaufs der Einstellzeit einmal gelöscht und dann erneut begonnen wird.

17. Selbstwählsperrverfahren nach Anspruch 11, wobei der Positionszustand zumindest einer des geöffneten Zustandes und des geschlossenen Zustandes des ersten und des zweiten Gehäuses (100, 200) ist.

## Revendications

1. Téléphone portable possédant une première coque (200) et une seconde coque (100) reliée à ladite première coque et comportant une unité d'actionnement de touches (15), comprenant :
des moyens de détermination (12) pour déterminer si le téléphone portable est dans un état d'attente d'appels entrants et sortants ;
des moyens de détection (31) pour détecter un état positionnel desdites première et seconde coques (100, 200) l'une par rapport à l'autre ;
des moyens de comptage de temps pour compter un temps de réglage préétabli lors d'une détection par lesdits moyens de détection (31) de l'état positionnel des première et seconde coques (100, 200) ; et
des moyens pour invalider les entrées par clavier, lorsque lesdits moyens de détermination (12) déterminent que le téléphone se trouve dans l'état d'attente et qu'ensuite les moyens de comptage de temps (14) détectent que le temps de réglage s'est écoulé, à l'exception d'au moins une entrée de codes d'identification personnels dans ladite unité d'actionnement de touches (15),
**caractérisé en ce que** ladite seconde coque (100) est reliée de manière rotative à ladite première coque (200) par le biais d'une pièce de jonction afin que la première coque (200) puisse tourner le long d'une face d'actionnement de touches de ladite unité d'actionnement de touches (15), et
**en ce que** les moyens de détection (31) sont conçus pour détecter une opération de rotation de la première coque (200), la détection étant effectuée par détection d'une position d'un axe qui tourne en prise avec la première coque (200), moyennant quoi différentes positions relatives des première et seconde coques (100, 200) sont détectables.

2. Téléphone portable selon la revendication 1, dans lequel
dans ledit état positionnel, ladite première coque (200) et ladite seconde coque (100) se superposent.

3. Téléphone portable selon la revendication 2, dans lequel lesdits moyens de détection (31) détectent l'un ou l'autre d'un état dans lequel lesdites première et seconde coques (100, 200) se superposent et d'un déverrouillage de l'état dans lequel lesdites première et seconde coques (100, 200) se superposent, en tant qu'état positionnel.

4. Téléphone portable selon la revendication 3, dans lequel lesdits moyens de détection (31) détectent un état dans lequel ladite seconde coque (100) tourne d'une quantité prédéterminée autour de la pièce de jonction par rapport à ladite première coque (200), en tant que déverrouillage de l'état dans lequel lesdites première et seconde coques se superposent.

5. Téléphone portable selon la revendication 1, dans lequel lesdits moyens pour invalider les entrées par clavier invalident les entrées par clavier lorsque des informations de réglage visant à inhiber automatiquement les entrées par clavier dans ladite unité d'actionnement de touches (15) sont préétablies.

6. Téléphone portable selon la revendication 1, dans lequel lorsqu'une opération prédéterminée préalablement établie est effectuée avant que le temps de réglage ne s'écoule, lesdits moyens de comptage de temps (14) effacent alors le comptage de temps et redémarrent ensuite le comptage du temps de réglage.

7. Téléphone portable selon la revendication 1, comprenant en outre :
des moyens pour régler le temps de réglage en fonction d'informations d'instructions provenant de l'extérieur.

8. Téléphone portable selon la revendication 1, dans lequel, lorsque l'opération prédéterminée préalablement établie est effectuée avant que le temps de réglage ne s'écoule, lesdits moyens de comptage de temps (14) effacent alors la détection d'écoulement du temps de réglage et puis redémarrent la détection d'écoulement du temps de réglage.

9. Téléphone portable selon la revendication 6 ou 8, dans lequel, lorsque l'opération prédéterminée est effectuée à l'aide d'une touche latérale, lesdits moyens de comptage du temps (14) effacent alors la détection d'écoulement du temps de réglage et puis redémarrent la détection d'écoulement du temps de réglage.

10. Téléphone portable selon la revendication 1, dans lequel l'état positionnel est au moins l'un ou l'autre de l'état ouvert et de l'état fermé desdites première et seconde coques (100, 200).

11. Procédé de verrouillage automatique de clavier pour un téléphone portable possédant une première coque (200) et une seconde coque (100) reliée à ladite première coque (200) et comportant une unité d'actionnement de touches (15), dans lequel ladite seconde coque (100) est reliée à ladite première coque (200) par le biais d'une pièce de jonction ; le procédé comprenant :
une première étape de détermination si le téléphone portable est dans un état d'attente d'appels entrants et sortants ;
une deuxième étape de détection d'un état positionnel desdites première et seconde coques (100, 200) l'une par rapport à l'autre ;
une troisième étape de détermination si un temps de réglage prédéfini s'est écoulé depuis la détection de l'état positionnel ; et
une quatrième étape d'invalidation des entrées par clavier, lorsqu'il est déterminé qu'il se trouve dans l'état d'attente et qu'il est ensuite détecté que le temps de réglage s'est écoulé, à l'exception d'au moins une entrée de codes d'identification personnels dans ladite unité d'actionnement de touches, **caractérisé en ce que** la première coque (200) peut tourner le long d'une face d'actionnement de touches de ladite unité d'actionnement de touches (15), et **en ce que** ladite seconde étape comprend la détection d'un état dans lequel ladite première coque (100) est tournée d'une quantité prédéterminée autour de la pièce de jonction par rapport à ladite seconde coque (200), par détection d'une position d'un axe qui tourne en étant en prise avec la première coque (200), moyennant quoi différentes positions relatives des première et seconde coques (100, 200) sont détectables.

12. Procédé de verrouillage automatique de clavier selon la revendication 11, dans lequel
dans ledit état positionnel, lesdites première et seconde coques (100, 200) se superposent.

13. Procédé de verrouillage automatique de clavier selon la revendication 11, dans lequel ladite quatrième étape comporte l'invalidation des entrées par clavier lorsque des informations de réglage visant à inhiber automatiquement les entrées par clavier dans ladite unité d'actionnement des touches sont préétablies.

14. Procédé de verrouillage automatique de clavier selon la revendication 11, dans lequel ladite étape d'invalidation d'entrées par clavier comprend l'invalidation des entrées par clavier lorsque des informations de réglage visant à inhiber automatiquement les entrées par clavier dans ladite unité d'actionnement de touches sont préétablies.

15. Procédé de verrouillage automatique de clavier selon la revendication 11, dans lequel, lorsqu'une opération prédéterminée préalablement établie est effectuée avant que le temps de réglage ne s'écoule, la détection d'écoulement du temps de réglage est alors effacée et puis redémarrée.

16. Procédé de verrouillage automatique de clavier selon la revendication 15, dans lequel, lorsque l'opération prédéterminée est effectuée à l'aide d'une touche latérale, la détection d'écoulement du temps de réglage est alors effacée et puis redémarrée.

17. Procédé de verrouillage automatique de clavier selon la revendication 11, dans lequel l'état positionnel est au moins l'un de l'état ouvert et de l'état fermé desdites première et seconde coques (100, 200).
